# EUROPEAN PATENT APPLICATION

(11) **EP 4 474 157 A1**
(43) Date of publication of application: **11.12.2024**
(21) Application number: 23795420.1
(22) Date of filing: 25.04.2023
(51) Int. Cl.: B41J 2/45, G03G 15/04, G02F 1/13357

(54) **LED LIGHT-EMITTING MODULE, LED PRINT HEAD, AND LED PRINTER**

(30) Priority: 29.04.2022 CN 202210476077
(71) Applicant: Huawei Technologies Co., Ltd., Shenzhen, Guangdong 518129 (CN)
(72) Inventor: ZHANG, Ting, Shenzhen, Guangdong 518129 (CN); LIU, Kang Chung, Shenzhen, Guangdong 518129 (CN); RUAN, Shibin, Shenzhen, Guangdong 518129 (CN)
(74) Representative: MERH-IP Matias Erny Reichl Hoffmann Patentanwälte PartG mbB
(86) International application number: PCT/CN2023/090617
(87) International publication number: WO 2023/207988

(57) **Abstract**

An LED light-emitting module (13), an LED print head (10), and an LED printer are disclosed. The LED light-emitting module includes a glass substrate (131), a drive circuit (132), an LED light-emitting assembly (133), and a drive chip (134). The drive circuit is disposed on a side surface of the glass substrate. The LED light-emitting assembly includes a plurality of LED light sources (1331) arranged in an array manner. The LED light-emitting assembly is disposed on a surface of the drive circuit and is electrically connected to the drive circuit. The drive chip is connected to the drive circuit, and controls, by using the drive circuit, the LED light source in the LED light-emitting assembly to be turned on or off. The LED light-emitting module has advantages of low processing difficulty and low costs.

## Description

### CROSS-REFERENCE TO RELATED APPLICATIONS

This application claims priority to Chinese Patent Application No. 202210476077.0, filed with the China National Intellectual Property Administration on April 29, 2022 and entitled "LED LIGHT-EMITTING MODULE, LED PRINT HEAD, AND LED PRINTER", which is incorporated herein by reference in its entirety.

### TECHNICAL FIELD

This application relates to the field of printing technologies, and in particular, to a light-emitting diode (light-emitting diode, LED) light-emitting module, an LED print head, and an LED printer.

### BACKGROUND

Existing printers may be classified into inkjet printers, laser printers, LED printers, and the like. Because the LED printer has no complex optical path system, the LED printer becomes an important research hotspot due to advantages of the LED printer, for example, a small size, low power consumption, and no noise. Currently, an LED light-emitting module of the LED printer generally includes a printed circuit board for disposing a drive chip and a silicon substrate for disposing a drive circuit, and the silicon substrate is generally integrated into the printed circuit board. During manufacturing of the LED light-emitting module of this structure, a complex drive circuit needs to be processed in the silicon substrate by using a complex manufacturing process, and the drive circuit needs to be connected to the drive chip of the printed circuit board. Consequently, a processing process of the LED light-emitting module of this structure is complex, and costs are high, affecting further development of the LED printer.

### SUMMARY

This application provides an LED light-emitting module, an LED print head, and an LED printer, to reduce processing difficulty of the LED light-emitting module and reduce costs of the LED printer.

According to a first aspect, this application provides an LED light-emitting module. The LED light-emitting module includes a glass substrate, a drive circuit, an LED light-emitting assembly, and a drive chip. The drive circuit is disposed on a side surface of the glass substrate. The LED light-emitting assembly includes a plurality of LED light sources arranged in an array manner. The LED light-emitting assembly is disposed on a surface of the drive circuit and is electrically connected to the drive circuit. The drive chip is connected to the drive circuit, and controls, by using the drive circuit, the LED light source in the LED light-emitting assembly to be turned on or off.

According to the LED light-emitting module provided in this application, the glass substrate is used as a carrier, and the drive circuit and the LED light-emitting assembly are disposed on the surface of the glass substrate, so that a processing process of the LED light-emitting module can be significantly reduced. The drive chip may be directly disposed on the surface of the glass substrate, or may be separately disposed and then connected to the drive circuit. Compared with a light-emitting module of a conventional silicon substrate structure, the LED light-emitting module of this structure can simplify a structure of the LED light-emitting module, and reduce process processing difficulty. Therefore, this is more conducive to reducing costs of an LED printer.

In a possible implementation, a lead-out end is disposed on the drive circuit, and the drive chip is connected to the lead-out end. The lead-out end is disposed, so that it is convenient to change a connection position between the drive chip and the drive circuit, and the connection position between the drive chip and the drive circuit may be led out to an edge of the glass substrate, to reduce reflection impact or scattering impact of the drive chip on emitted light of the LED light-emitting assembly.

In a possible implementation, the LED light-emitting module further includes a flexible printed circuit configured to connect to an external control circuit, and the flexible printed circuit is connected to the drive circuit. The flexible printed circuit is disposed, so that a connection between the drive chip and a control chip of the LED printer can be facilitated.

In a possible implementation, the drive chip is disposed on the flexible printed circuit, and is connected to the drive circuit through the flexible printed circuit. The drive chip is disposed on the flexible printed circuit, so that a size of the glass substrate can be further reduced, and space occupied by the LED light-emitting assembly can be reduced, thereby further reducing a volume of an LED print head.

In a possible implementation, the plurality of LED light sources are arranged in a line shape. An arrangement direction of the plurality of LED light sources is set in an axial direction of a photosensitive drum of the LED printer, so that light of the LED light sources is a straight line after being irradiated on the photosensitive drum, and the straight line extends along an axis of the photosensitive drum.

In a possible implementation, the LED light-emitting assembly includes a plurality of light-emitting units, and the plurality of light-emitting units are arranged in a first direction. Each light-emitting unit includes a plurality of LED light sources, the plurality of LED light sources are arranged in a second direction in any light-emitting unit, and an included angle is set between the first direction and the second direction. The first direction is in an axial direction of a photosensitive drum, and there is a specific included angle between the second direction and the axial direction of the photosensitive drum. The included angle may range from 0.1° to 45°, and may be specifically set based on mutual positions between the photosensitive drum and the LED light-emitting module and a rotation speed of the photosensitive drum. This is not specifically limited herein. Different LED light sources emit light in a sequence. Therefore, in each light-emitting unit, each LED light source is disposed in the second direction, so that rotation of the photosensitive drum may be coordinated. In this way, scanning light of the LED light sources is in a same straight line relative to the photosensitive drum.

In a possible implementation, the plurality of LED light sources in any light-emitting unit are arranged based on a same dislocation distance, and any two adjacent light-emitting units are arranged based on a same distance.

In a possible implementation, the drive circuit is a thin film transistor (thin film transistor, TFT) drive circuit. Setting the drive circuit as the TFT drive circuit can reduce processing difficulty of the drive circuit, facilitate processing, and help reduce processing costs.

According to a second aspect, this application further provides an LED print head. The printer includes a housing, a lens assembly, and the LED light-emitting module according to the first aspect of this application. A cavity is provided on the housing, an opening communicating with the cavity is provided on a side surface of the housing, the lens assembly is disposed at the opening and blocks the opening, the LED light-emitting module is disposed in the cavity, the LED light-emitting assembly is disposed toward the lens assembly, and the lens assembly is capable of transmitting light emitted by the LED light-emitting assembly.

In a possible implementation, a light-absorbing layer is disposed on an inner wall of the housing, and the light-absorbing layer is configured to absorb scattered light in the cavity. The light-absorbing layer is disposed, so that impact of light scattering on light-emitting light inside the housing can be reduced.

According to a third aspect, this application further provides an LED printer. The LED printer includes a casing and the LED print head according to the second aspect that is disposed in the casing.

For technical effect that may be achieved in the second aspect and the third aspect, refer to corresponding effect descriptions in the first aspect. Details are not described herein again.

### BRIEF DESCRIPTION OF DRAWINGS

FIG. 1 is a diagram of a structure of a printer according to an embodiment of this application;
FIG. 2 is a diagram of a structure of an LED print head according to an embodiment of this application;
FIG. 3 is a diagram of an internal structure of an LED print head according to an embodiment of this application;
FIG. 4 is a diagram of a structure of a lens assembly according to an embodiment of this application;
FIG. 5 is a diagram of a structure of an LED light-emitting module according to an embodiment of this application;
FIG. 6 is a diagram of another structure of an LED light-emitting module according to an embodiment of this application; and
FIG. 7 is a diagram of still another structure of an LED light-emitting module according to an embodiment of this application.

Reference numerals:
100: casing; 10: LED print head; 11: housing; 11a: cavity; 11b: opening; 12: lens assembly; and 121: frame;
122: cylindrical lens array group; 123: cylindrical lens; 13: LED light-emitting module; and 131: glass substrate;
132: drive circuit; 133: LED light-emitting assembly; 133a: light-emitting unit; 1331: LED light source; and 134: drive chip;
135: flexible printed circuit; 14: light-absorbing layer; 20: charging roller; 30: photosensitive drum; 40: magnetic roller; and 50: ink cartridge; and
60: transfer roller; and 70: pressure roller.

### DESCRIPTION OF EMBODIMENTS

For ease of understanding this application, the following first explains and describes related technical terms.

Light-emitting diode: The light-emitting diode, LED for short, includes a PN junction like a common diode, and has unidirectional conductivity. After a forward voltage is applied to the LED, an electron hole injected from a P region to an N region and an electron injected from the N region to the P region are compounded near the PN junction, to generate spontaneously radiated fluorescence.

Micro light-emitting diode: The micro light-emitting diode is referred to as a micro-LED for short. An LED with a size less than 100 micrometers has advantages of high brightness and low power consumption.

Thin film transistor: The thin film transistor, TFT for short, is made of a thin film semiconductor deposited on a substrate, and has a function of controlling circuit connection or disconnection, to drive an LED to light up.

Flexible printed circuit: The flexible printed circuit, FPC for short, is a printed circuit board that is made by using polyimide or a polyester film as a base material and that has high reliability and flexibility, and has characteristics of a high wiring density, a light weight, a small thickness, and good bending performance.

To make objectives, technical solutions, and advantages of this application clearer, the following explains and describes an application scenario of an LED light-emitting module in this application with reference to accompanying drawings.

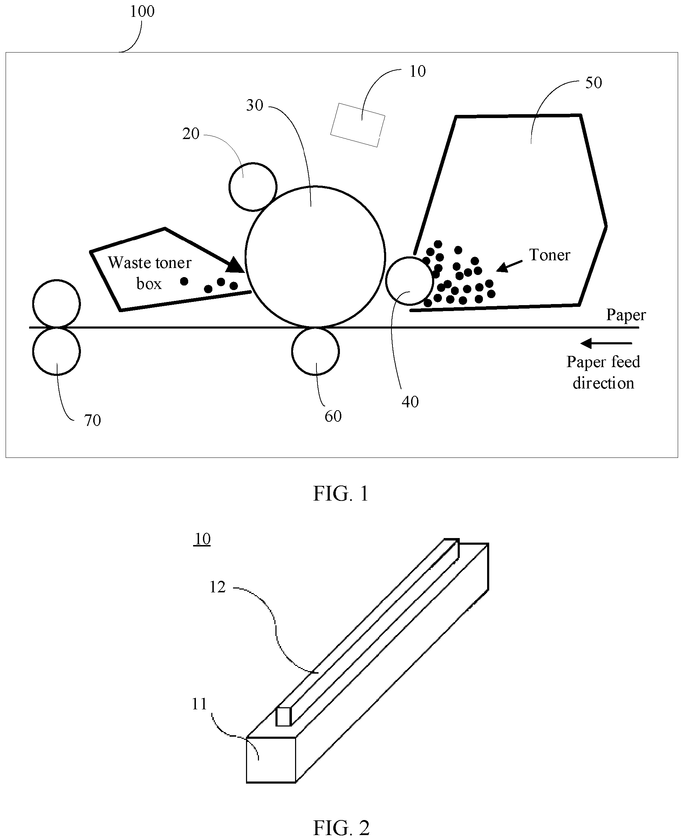

FIG. 1 is a diagram of structure composition of a printer. As shown in FIG. 1, an LED printer generally includes a casing 100 and an LED print head 10, a charging roller 20, a photosensitive drum 30, a magnetic roller 40, an ink cartridge 50, a transfer roller 60, and a pressure roller 70 that are disposed in the casing 100. The charging roller 20 charges the photosensitive drum 30, so that a surface of the photosensitive drum 30 carries a positive charge. As the photosensitive drum 30 rotates, the LED print head 10 scans the surface of the photosensitive drum 30, so that the surface of the photosensitive drum 30 is photosensitive, and an unnecessary charge is removed. In this way, a charged pattern is formed on the surface of the photosensitive drum 30, and a latent image is formed. As the photosensitive drum 30 rotates, toner with an opposite charge is attracted from the magnetic roller 40 to the latent image on the surface of the photosensitive drum 30, to complete a development process. As the photosensitive drum 30 rotates, the toner is attracted to paper by the transfer roller 60, and after being heated by the pressure roller 70, the toner is solidified on a surface of the paper. The LED print head 10 becomes a current research and development hotspot due to advantages of the LED print head 10, for example, a small size, no noise, and low power consumption.

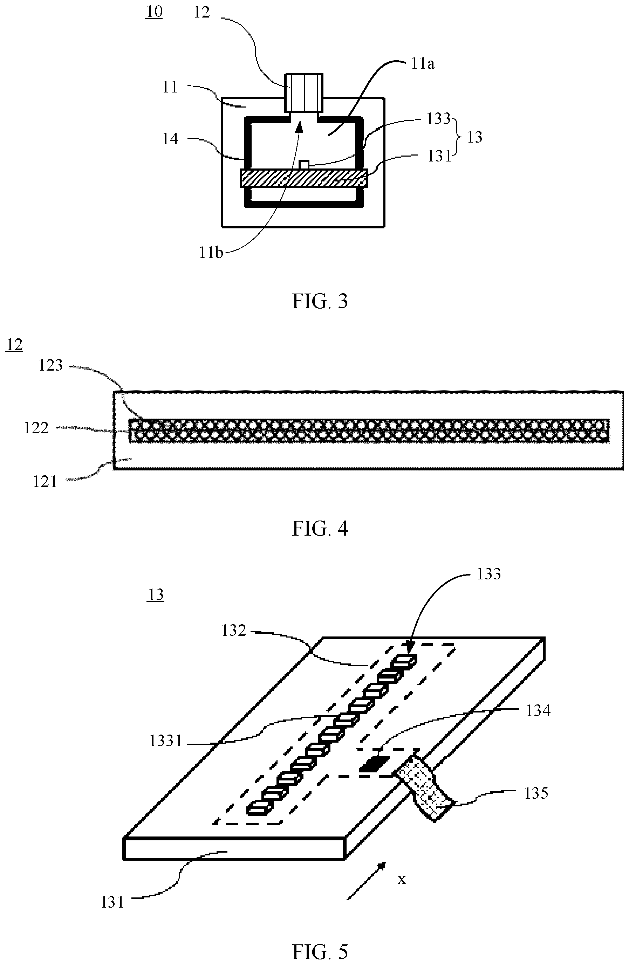

FIG. 2 is a diagram of an external structure of the LED print head. FIG. 3 is a diagram of an internal structure of the LED print head. As shown in FIG. 2 and FIG. 3, in an embodiment of this application, the LED print head 10 includes a housing 11, a lens assembly 12, and an LED light-emitting module 13. A cavity 11a is provided on the housing 11, and the lens assembly 12 and the LED light-emitting module 13 are both disposed in the cavity 11a. Light emitted by the LED light-emitting module 13 is irradiated on the surface of the photosensitive drum 30 after being focused by the lens assembly 12, to form a latent image on the surface of the photosensitive drum 30. A distance between the LED light-emitting module 13 and the lens assembly 12 depends on a focal length of the lens assembly 12.

The following explains and describes a structure of the housing with reference to FIG. 1 to FIG. 3.

Refer to both FIG. 1 and FIG. 3. An opening 11b communicating with the cavity 11a is provided on a side surface of the housing 11. The housing 11 may be made of a material such as resin, structural steel, or aluminum. A specific material of the housing 11 is not limited. A shape of the housing 11 may be, for example, a cuboid structure. The opening 1 1b on the housing 11 may be provided on a length-width surface of the housing 11. The opening 11b may be a long-strip opening, and a long side of the opening 11b may be parallel to an axial direction of the photosensitive drum 30.

Still refer to FIG. 1 and FIG. 3. In a possible implementation, a light-absorbing layer 14 is disposed on an inner wall of the housing 11, and the light-absorbing layer 14 is configured to absorb scattered light in the cavity 11a. By disposing the light-absorbing layer 14, stray light that is from the LED light-emitting module 13 and that is irradiated outside the lens assembly can be absorbed, to prevent the stray light from being irradiated on the photosensitive drum 30 and interfering with imaging. The light-absorbing layer 14 may be attached to an inner surface of the housing 11, and may be a polymer thin film, a metal thin film, a ceramic thin film, or the like.

The following explains and describes a structure of the lens assembly with reference to FIG. 2 to FIG. 4.

As shown in FIG. 2 and FIG. 3, the lens assembly 12 is disposed at the opening 11b of the housing 11 and blocks the opening 11b. FIG. 4 is a diagram of a structure of the lens assembly. As shown in FIG. 4, in an embodiment, the lens assembly 12 includes a frame 121 and a cylindrical lens array group 122 connected to the frame 121. Refer to both FIG. 3 and FIG. 4. The cylindrical lens array group 122 includes a plurality of cylindrical lenses 123 that are sequentially arranged. There may be 10, 30, 50, 80, 100, 150, 200, or more cylindrical lenses 123. An axial direction of any cylindrical lens 123 is perpendicular to an opening surface of the housing 11, in other words, parallel to a light-emitting direction of the LED light-emitting module 13. The cylindrical lenses 123 in the cylindrical lens array group 122 are divided into a plurality of rows, for example, two rows, three rows, four rows, or more rows. As shown in FIG. 4, the cylindrical lenses 123 may be arranged in two rows. A specific quantity of rows of the cylindrical lenses 123 is not specifically limited herein. Refer to FIG. 1. In any row, cylindrical lenses 123 may be arranged in the axial direction of the photosensitive drum, namely, a direction perpendicular to the paper in FIG. 1.

The following explains and describes a structure of the LED light-emitting module with reference to FIG. 1, FIG. 3, and FIG. 5.

FIG. 5 is a diagram of a structure of the LED light-emitting module. As shown in FIG. 5, the LED light-emitting module 13 includes a glass substrate 131, a drive circuit 132, an LED light-emitting assembly 133, and a drive chip 134. The glass substrate 131 may provide support for the drive circuit 132, the LED light-emitting assembly 133, and the drive chip 134. Refer to both FIG. 1 and FIG. 5. The glass substrate 131 may be of a rectangular structure, and a length direction of the glass substrate 131 may be set in the axial direction of the photosensitive drum 30. A size of the glass substrate 131 may be designed based on a specific function and a required size of the LED print head. This is not specifically limited herein.

Still refer to FIG. 5. The drive circuit 132 is disposed on a surface of the glass substrate 131. The drive circuit 132 may be a TFT drive circuit that is manufactured and formed by using a semiconductor thin film transistor such as polycrystalline silicon or amorphous silicon. The TFT drive circuit may be manufactured by using a method such as chemical vapor deposition or sputtering. A process is simple and a yield rate is high. The TFT drive circuit is combined with the glass substrate 131, so that processing costs of the LED light-emitting module 13 can be significantly reduced. It should be noted that the drive circuit 132 should further include a passivation layer (not shown in the figure) formed on a surface of the drive circuit 132, and the passivation layer is configured to protect the drive circuit 132 from being affected by an external environment.

Refer to both FIG. 3 and FIG. 5. In the LED light-emitting module 13, the drive circuit 132 and the LED light-emitting assembly 133 are disposed toward the lens assembly 12, and the TFT drive circuit is configured to drive the LED light-emitting assembly 133 to emit light, to provide a light source for light sensing of the photosensitive drum. The following describes the LED light-emitting assembly 133 in detail.

Still refer to FIG. 5. The LED light-emitting assembly 133 includes a plurality of LED light sources 1331. The LED light source 1331 may be a micro-LED light source, and an array including the LED light sources may be a micro-LED light source array. The micro-LED may be made of a semiconductor material such as InGaAlP, InGaAlAs, GaN or GaAs. There may be a plurality of LED light sources 1331 in the LED light-emitting assembly 133, for example, there may be 10, 30, 50, 80, 100, 150, 200, or more LED light sources 1331. A quantity of LED light sources 1331 may be designed based on a specific function and a size of the printer. This is not specifically limited herein.

The plurality of LED light sources 1331 in the LED light-emitting assembly 133 may be arranged in a line shape. Specifically, as shown in FIG. 5, the plurality of LED light sources 1331 may be arranged at equal spacings based on a specific interval. In addition, refer to both FIG. 1 and FIG. 5. The plurality of LED light sources 1331 may be arranged in a line shape in the axial direction (a direction x shown in FIG. 5) of the photosensitive drum 30. The plurality of LED light sources 1331 are driven, by the TFT drive circuit, to emit light. During operation, the LED light sources 1331 in the LED light-emitting assembly 133 sequentially emit the light, and the light is projected on the photosensitive drum 30 through the lens assembly 12, to complete scanning of a row of printed information.

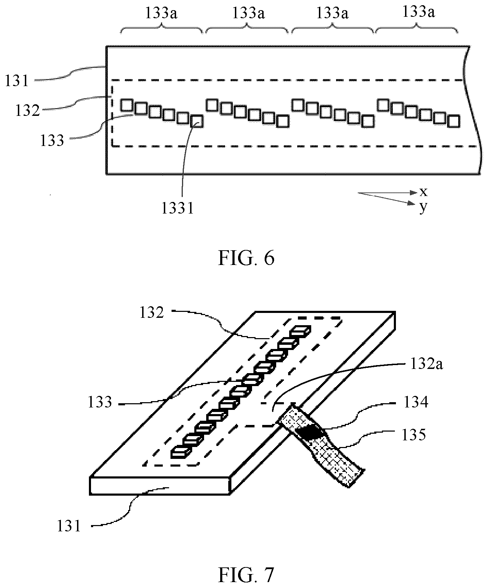

FIG. 6 is a diagram of a structure of an LED light-emitting assembly according to another embodiment of this application. As shown in FIG. 6, the LED light-emitting assembly may include a plurality of light-emitting units 133a, and any light-emitting unit 133a may include a plurality of LED light sources 1331. The plurality of light-emitting units 133a may be sequentially disposed in a first direction (a direction x shown in FIG. 6), and the plurality of LED light sources 1331 in any light-emitting unit 133a may be disposed in a second direction (a direction y shown in FIG. 6). Refer to FIG. 1. The first direction may be the axial direction (namely, the direction perpendicular to the paper in FIG. 1) of the photosensitive drum 30. An included angle may be set between the second direction and the first direction, to compensate for a scanning point tilt caused by rotation of the photosensitive drum 30. Specifically, the included angle between the first direction and the second direction may be designed based on a rotation speed of the photosensitive drum 30 and a function of the LED printer. This is not specifically limited herein.

The following describes the structure shown in FIG. 6 in detail. Refer to FIG. 6. The plurality of light-emitting units 133a may be arranged in a main scanning direction of the printer, in other words, arranged in a straight line in the direction x shown in FIG. 6. Refer to both FIG. 1 and FIG. 6. During printing, the LED light sources 1331 sequentially emit light in the main scanning direction x, and the photosensitive drum 30 simultaneously rotates in a circumferential direction of the photosensitive drum 30. Due to this relative motion, when a next LED light source 1331 emits light, an irradiation position of the LED light source 1331 is not in a same row as an irradiation position of a previous LED light source 1331. Therefore, after all LED light sources 1331 are arranged based on the light-emitting units 133a, the plurality of LED light sources 1331 are arranged in the second direction inside the light-emitting unit 133a, which can eliminate a position error caused by rotation of the photosensitive drum 30. Specifically, as shown in FIG. 6, for example, six LED light sources 1331 may be disposed on each light-emitting unit 133a, two adjacent LED light sources 1331 are disposed in the second direction, in other words, arranged in the direction y in FIG. 6, and any two adjacent LED light sources 1331 may be disposed based on a same dislocation distance. The plurality of light-emitting units 133a may be arranged in the first direction, in other words, arranged in the direction x shown in FIG. 6. Any two adjacent light-emitting units 133a may be disposed based on a same arrangement position.

In the foregoing, turn-on or turn-off of the LED light source 1331 may be driven by the drive circuit 132, and the drive circuit 132 may be controlled by the drive chip 134. The following further describes the drive chip in detail with reference to FIG. 5 and FIG. 7.

As shown in FIG. 5, in an embodiment of this application, the drive chip 134 may be disposed on the surface of the glass substrate 131, and is connected to the drive circuit 132. When receiving a print signal generated by an external system control chip, the drive chip 134 may control, by using the drive circuit 132, the LED light source 1331 to be turned on or off. The drive chip 134 may be disposed on the surface of the drive circuit 132 except for a region on which the LED light-emitting assembly 133 is disposed. Refer to FIG. 5. In an embodiment, to facilitate connection between the drive chip 134 and the drive circuit 132, a lead-out end 132a may be disposed in the drive circuit 132, and the drive circuit 132 is connected to the drive chip 134 through the lead-out end 132a. Specifically, the lead-out end 132a may be disposed on an edge of the glass substrate 131. After the drive chip 134 is connected to the lead-out end 132a, the drive chip 134 may alternatively be disposed in an edge region of the glass substrate 131.

FIG. 7 is a diagram of a structure of an LED light-emitting module according to another embodiment. As shown in FIG. 7, the LED light-emitting module 13 may further include a flexible printed circuit 135. The flexible printed circuit 135 may be disposed at an edge of the glass substrate 131, and is connected to the lead-out end 132a of the drive circuit 132. When the flexible printed circuit 135 is disposed on the LED light-emitting module 13, the drive chip 134 may be disposed on a surface of the flexible printed circuit 135, and is connected to the flexible printed circuit 135. After the drive chip 134 is connected to the flexible printed circuit 135, the drive chip 134 and the flexible printed circuit 135 are connected to the drive circuit 132 as a whole, so that an area of the glass substrate 131 can be further reduced, thereby reducing a size of the LED light-emitting module 13, and facilitating a miniaturization design of the LED print head. The drive chip 134 and the flexible printed circuit 135 may be disposed on a side that is of the glass substrate 131 and that faces the lens assembly 12, or may be disposed on a side that is of the glass substrate 131 and that faces away from the lens assembly 12. It may be understood that a signal of the flexible printed circuit 135 may be led out from the housing 11 and connected to the external system control chip.

Terms used in the foregoing embodiments are merely for a purpose of describing specific embodiments, but are not intended to limit this application. Terms "one", "a", "the", "the foregoing", "this", and "the one" of singular forms used in this specification and the appended claims of this application are also intended to include forms such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. Terms "include", "comprise", "have", and their variants all mean "include but are not limited to", unless otherwise specifically emphasized in another manner.

The foregoing descriptions are merely specific implementations of this application, but are not intended to limit a protection scope of this application. Any variation or replacement readily figured out by a person skilled in the art within a technical scope disclosed in this application shall fall within the protection scope of this application. Therefore, the protection scope of this application shall be subject to the protection scope of the claims.

## Claims

1. An LED light-emitting module, comprising: a glass substrate, a drive circuit, an LED light-emitting assembly, and a drive chip, wherein
the drive circuit is disposed on a side surface of the glass substrate, the LED light-emitting assembly comprises a plurality of LED light sources arranged in an array manner, and the LED light-emitting assembly is disposed on a surface of the drive circuit and is electrically connected to the drive circuit; and
the drive chip is connected to the drive circuit, and controls, by using the drive circuit, the LED light source in the LED light-emitting assembly to be turned on or off.

2. The LED light-emitting module according to claim 1, wherein a lead-out end is disposed on the drive circuit, and the drive chip is connected to the lead-out end.

3. The LED light-emitting module according to claim 1 or 2, wherein the LED light-emitting module further comprises a flexible printed circuit configured to connect to an external control circuit, and the flexible printed circuit is connected to the drive circuit.

4. The LED light-emitting module according to claim 3, wherein the drive chip is disposed on the flexible printed circuit, and is connected to the drive circuit through the flexible printed circuit.

5. The LED light-emitting module according to any one of claims 1 to 4, wherein the plurality of LED light sources are arranged in a line shape.

6. The LED light-emitting module according to any one of claims 1 to 4, wherein the LED light-emitting assembly comprises a plurality of light-emitting units, and the plurality of light-emitting units are arranged in a first direction; and each light-emitting unit comprises a plurality of LED light sources, the plurality of LED light sources are arranged in a second direction in any light-emitting unit, and an included angle is set between the first direction and the second direction.

7. The LED light-emitting module according to any one of claims 1 to 6, wherein the drive circuit is a thin film transistor drive circuit.

8. An LED print head, comprising a housing, a lens assembly, and the LED light-emitting module according to any one of claims 1 to 7, wherein a cavity is provided on the housing, an opening communicating with the cavity is provided on a side surface of the housing, the lens assembly is disposed at the opening and blocks the opening, the LED light-emitting module is disposed in the cavity, the LED light-emitting assembly is disposed toward the lens assembly, and the lens assembly is capable of transmitting light emitted by the LED light-emitting assembly.

9. The LED print head according to claim 8, wherein a light-absorbing layer is disposed on an inner wall of the housing, and the light-absorbing layer is configured to absorb scattered light in the cavity.

10. An LED printer, comprising a casing and the LED print head according to claim 8 or 9 that is disposed in the casing.
